(19) **Europäisches Patentamt European Patent Office Office européen des brevets**

(11) **EP 3 980 283 B1**

(12) **FASCICULE DE BREVET EUROPEEN**

(45) Date de publication et mention de la délivrance du brevet:
**02.08.2023 Bulletin 2023/31**

(21) Numéro de dépôt: **20730615.0**

(22) Date de dépôt: **04.06.2020**

(51) Classification Internationale des Brevets (IPC):
**B60C 15/024** *(2006.01)*  **B60C 9/20** *(2006.01)*
**B60C 15/06** *(2006.01)*  **B60C 9/02** *(2006.01)*

(52) Classification Coopérative des Brevets (CPC):
**B60C 15/024; B60C 9/20; B60C 15/0628;**
B60C 15/0009; B60C 15/0632; B60C 2009/0269;
B60C 2009/2012; B60C 2015/065; B60C 2200/06

(86) Numéro de dépôt international:
**PCT/EP2020/065418**

(87) Numéro de publication internationale:
**WO 2020/245241 (10.12.2020 Gazette 2020/50)**

(54) **PNEUMATIQUE COMPORTANT UNE ARMATURE DE SOMMET CONSTITUEE DE DEUX COUCHES DE SOMMET DE TRAVAIL ET DES FLANCS OPTIMISES**

REIFEN MIT EINER SCHEITELVERSTÄRKUNG, BESTEHEND AUS ZWEI ARBEITSGÜRTEL-SCHEITELLAGEN UND OPTIMIERTEN SEITENWÄNDEN

TYRE HAVING A CROWN REINFORCEMENT MADE UP OF TWO WORKING CROWN LAYERS AND OPTIMIZED SIDEWALLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2019 FR 1906039**

(43) Date de publication de la demande:
**13.04.2022 Bulletin 2022/15**

(73) Titulaire: **COMPAGNIE GENERALE DES ETABLISSEMENTS MICHELIN**
**63000 Clermont-Ferrand (FR)**

(72) Inventeurs:
• FOURNIER, Orel
  **63040 Clermont-Ferrand Cedex 9 (FR)**
• NOEL, Sébastien
  **63040 Clermont-Ferrand Cedex 9 (FR)**
• **BESTGEN, Luc**
  **63040 Clermont-Ferrand Cedex 9 (FR)**
• **GUERBERT-JUBERT, Jean-Luc**
  **63040 Clermont-Ferrand Cedex 9 (FR)**

(74) Mandataire: **Le Cam, Stéphane Georges Elie**
**Manufacture Française des Pneumatiques Michelin**
**DCJ/PI - F35 - Ladoux**
**23, place des Carmes-Déchaux**
**63040 Clermont-Ferrand Cedex 9 (FR)**

(56) Documents cités:
WO-A1-2017/149222   FR-A1- 2 415 016
FR-A1- 2 984 221    JP-A- 2000 185 530
JP-A- 2010 132 068   JP-A- 2012 081 951
JP-A- 2014 156 192

EP 3 980 283 B1

**Description**

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. L'armature sommet peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemples décrites dans les documents FR 2779387 ou US 2006/0000199.

La présence de ces couches d'éléments de renforcement ou raidisseurs contribuent à épaissir la zone du bourrelet jusqu'en bas de la zone du flanc en direction de la zone du pneumatique où celui-ci présente sa largeur axiale la plus importante. Ce profil du pneumatique semble générer des fragilités du pneumatique au regard de certains type de chocs notamment lorsque le pneumatique vient au contact de bordures de trottoir.

Par ailleurs, certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités de la couche de sommet axialement la plus courte, ont pour conséquence l'apparition et la propagation de fissures dans la gomme au niveau desdites extrémités. Le même problème existe dans le cas de bords de deux couches d'éléments de renforcement, lesdites couches n'étant pas obligatoirement radialement adjacentes à l'une à l'autre.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

En complément, la demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

En outre, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance.

Il est encore connu de l'homme du métier d'augmenter le nombre de nappes constituant l'armature sommet pour améliorer l'endurance du pneumatique à l'égard de tels chocs. En complément, les documents JP 2000 185530 A, FR 2 415 016 A1 et JP 2012 081951 A décrivent des pneumatiques pourvus d'une couche d'éléments de renforcement supportant le retournement de la couche de carcasse.

Quelle que soit la solution envisagée parmi les solutions telles que présentées précédemment, la présence d'une ou plusieurs couches d'éléments de renforcement supplémentaire conduit à une masse plus importante du pneumatique et à des coûts de fabrication des pneumatiques plus importants.

Il est encore connu du document WO 2017/149222 un pneumatique dont l'armature sommet est allégée en améliorant les propriétés d'endurance du pneumatique à l'égard de tels chocs. Les inventeurs ont toutefois mis en évidence que lors de roulage sur des sols extrêmement sollicitant pour les pneumatiques, les performances en termes d'endurance de tels pneumatiques pouvaient être dégradées, par exemple dans des conditions de roulage, combinant la vitesse du véhicule, la charge portée par le pneumatique et la nature du sol, particulièrement agressives. Il est en effet possible d'observer une dégradation des performances en termes d'endurance par exemple lors de roulage à vitesse relativement élevée sur des sols de type approche chantier très agressifs pour le pneumatique.

Les inventeurs se sont ainsi donnés pour mission de fournir des pneumatiques pour véhicules "Poids-Lourds" par exemple de type « approche chantier », dont la masse globale est limitée et dont à la fois les performances d'endurance des zones des bourrelets sont conservées avec une diminution des dommages lorsque le pneumatique vient au contact d'une bordure de trottoir et les performances d'endurance au regard des chocs subis sur la bande de roulement sont améliorées quelle que soit la nature du sol et les conditions de roulage.

Ce but a été atteint selon l'invention par un pneumatique destiné à être monté sur une jante creuse de type 15° drop center, comprenant une armature de carcasse radiale, constituée d'une unique couche d'armature de carcasse formée d'éléments de renforcement, ledit pneumatique comprenant une armature de sommet comprenant deux couches de sommet de travail d'éléments de renforcement croisés d'une couche à l'autre en faisant avec la direction circonférentielle des angles ($\alpha$1, $\alpha$2) compris entre 8° et 45°, lesdits angles $\alpha$1 et $\alpha$2 étant orientés de part et d'autre de la direction circonférentielle, l'armature de sommet étant coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement d'armature de carcasse étant renforcé par au moins une couche d'éléments de renforcement ou raidisseur, lesdites deux couches de sommet de travail étant seules présentes pour constituer l'armature de sommet sur au moins 75% de la largeur axiale de l'armature sommet, les éléments de renforcement de la couche de travail radialement la plus extérieure formant un angle α2 avec la direction circonférentielle supérieur en valeur absolue à l'angle α1 formé par les éléments de renforcement de la couche de travail radialement la plus intérieure avec la direction circonférentielle, la valeur absolue de la différence entre les valeurs absolues des angles α2 et α1 étant supérieure à 8°, l'angle moyen α satisfaisant la relation :

$$13+131*\exp(-L/100) < \alpha < 20+164*\exp(-L/100),$$

α étant défini par la relation α = Arctan$((\tan(|\alpha1|)*\tan(|\alpha2|))^{1/2})$, L étant la largeur maximum du pneumatique mesurée selon la direction axiale et exprimée en mm, les éléments de renforcement métalliques de ladite couche d'armature de carcasse étant des câbles, de préférence non frettés, présentant au test dit de perméabilité un débit inférieur à 20 cm³/min, un mélange caoutchouteux étant présent au moins localement au sein de la structure du desdits câbles et, dans une coupe méridienne dudit pneumatique,

- tout point du profil de la surface extérieure S du pneumatique, entre un premier point F, lui-même défini par l'intersection d'une droite d'orientation axiale, passant par le point E axialement le plus extérieur de la partie principale de la couche d'armature de carcasse et la surface extérieure S du pneumatique, et un point A est à une distance D, constante, de la partie principale de la couche d'armature de carcasse, ladite distance étant mesurée en tout point selon une direction normale à la partie principale de la couche d'armature de carcasse,

- le point A est radialement extérieur à un premier cercle C1 de rayon R1 centré sur l'extrémité du retournement de la couche d'armature de carcasse, R1 étant compris entre 6 et 15 mm,

- radialement à l'intérieur du point A, la surface extérieure S du pneumatique se prolonge par un arc de cercle de rayon R2 supérieur à R1 et dont le centre est axialement extérieur à la surface S du pneumatique,

- l'arc de cercle de rayon R2 est tangent à son extrémité radialement la plus intérieure B à un arc de cercle de rayon R1 centré sur l'extrémité radialement la plus extérieure du raidisseur, prolongeant la surface extérieure S du pneumatique radialement vers l'intérieur jusqu'au point C, axialement le plus extérieur d'un deuxième cercle C2 de rayon R1 centré sur l'extrémité radialement la plus extérieure du raidisseur.

Au sens de l'invention, une jante creuse de type 15° drop center ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

La largeur L est mesurée sur un pneumatique monté sur sa jante nominale et gonflé à sa pression nominale, selon l'ETRTO, et est exprimée en millimètres.

Les angles α1 et α2, exprimés en degré, sont mesurés sur une coupe du pneumatique. Les mesures d'angles sont selon l'invention réalisées au niveau du plan médian circonférentiel.

La coupe méridienne du pneumatique est définie conformément à l'invention telle que les barycentres des tringles forment une droite orientée axialement, lesdits barycentres étant distants l'un de l'autre d'une distance égale à la largeur de la jante nominale J augmentée de 20 mm et diminuée de deux fois la distance mesurée axialement entre un barycentre d'une tringle et un point de la surface extérieure du pneumatique.

La position du point axialement le plus extérieur de la partie principale de l'armature de carcasse est déterminée sur un pneumatique monté et gonflé selon les conditions nominales. Cette détermination peut être réalisée par exemple selon une technique de tomographie.

La distance D est mesurée selon la normale à la partie principale de la couche d'armature de carcasse entre le point axialement le plus extérieur d'un renfort de la couche d'armature de carcasse et un point de ladite surface S.

Au sens de l'invention, une distance D constante signifie que la distance D ne varie pas de plus de 0.5 mm. Les variations d'épaisseur ne sont alors dues qu'aux phénomènes de fluage lors de la fabrication et de la cuisson du pneumatique.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit. Selon l'invention, la partie du câble testée est située dans la zone du bourrelet du pneumatique radialement à l'extérieur de la tringle.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 $cm^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de $\pm$ 0,2 $cm^3$/min, les valeurs mesurées inférieures ou égales à 0,2 $cm^3$/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Avantageusement encore, le pneumatique selon l'invention est destiné à être gonflé à une pression de gonflage P supérieure ou égale à 6.5 bar.

De préférence selon l'invention, les éléments de renforcement desdites deux couches de sommet de travail sont métalliques.

Selon une variante avantageuse de réalisation de l'invention, le rayon R1 du premier cercle C1, centré sur l'extrémité du retournement de la couche d'armature de carcasse et du deuxième cercle C2 centré sur l'extrémité radialement la plus extérieure du raidisseur, est compris entre 8 et 11 mm.

Avantageusement encore, le rayon R2 est strictement supérieur au rayon R1.

Selon un mode de réalisation préféré de l'invention, le rayon R2 est supérieur à 1.5 fois le rayon R1 et de préférence inférieur à 8 fois le rayon R1.

Avantageusement selon l'invention, la distance D, mesurée selon une direction normale à la partie principale de la couche d'armature de carcasse, est supérieure à 3 mm et de préférence inférieure à 7 mm.

Les résultats obtenus avec des pneumatiques conformes à l'invention ont effectivement mis en évidence que les performances en termes d'endurance peuvent être améliorées notamment lors de roulage sur sol caillouteux, l'armature sommet du pneumatique étant allégée. L'allègement de l'armature sommet du pneumatique s'accompagne d'une simplification de fabrication et d'une diminution des coûts de fabrication.

Contre toute attente, les résultats ont effectivement mis en évidence que les pneumatiques selon l'invention peuvent être allégés en diminuant le nombre de couches constitutives de l'armature sommet tout en conservant voire améliorant les propriétés d'endurance du sommet du pneumatique notamment à l'égard de chocs apparaissant sur la bande de roulement.

Il est en effet connu de l'homme du métier que pour améliorer les performances d'endurance de l'armature sommet d'un pneumatique à l'égard de ce type de chocs, il est usuel d'augmenter le nombre de couches d'éléments de renforcement.

Les inventeurs pensent interpréter ces résultats du fait de l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure. Ils ont constaté que cet angle plus petit semble entraîner un retard dans la prise de tension par les éléments de renforcement lors d'un tel choc. Usuellement, lors de chocs comparables à ceux observés lors d'un roulage sur sol caillouteux la rupture d'éléments de renforcement si elle intervient s'observe sur la couche radialement la plus intérieure. Ces constats semblent indiquer que face à ce type d'agressions, la différence d'angles des éléments de renforcement entre les deux couches de sommet de travail permet d'améliorer les performances d'endurance du pneumatique tout en diminuant le nombre de couches de l'armature de sommet.

Des essais ont par ailleurs montré que les pneumatiques ainsi réalisés selon l'invention présentent moins de dégradation et résistent donc mieux en termes d'usure due aux chocs et/ou frottement sur les bordures de trottoir. Par ailleurs, les pneumatiques selon l'invention semblent conserver des performances en termes d'endurance, et notamment en termes d'endurance des zones des bourrelets, au moins aussi bonnes que celles des pneumatiques de conception plus usuelle.

Ces résultats sont d'autant plus surprenants que les conceptions plus usuelles de ce type de pneumatiques comportent une zone du bourrelet relativement épaisse jusqu'au bas de la zone du flanc en direction de la zone du pneumatique où celui-ci présente sa largeur axiale la plus importante, notamment pour mieux absorber les agressions dues aux chocs ou frottements subis lors de contact avec les bordures de trottoir.

Les inventeurs ont ainsi su mettre en évidence que les pneumatiques réalisés conformément à l'invention et qui présentent une zone du bourrelet relativement peu épaisse dans sa partie radialement la plus extérieure permettent de mieux résister aux agressions en cas de contact avec les bordures de trottoir tout en conservant des propriétés en termes d'endurance satisfaisantes.

Les inventeurs pensent interpréter ce résultat du fait du profil de la surface extérieure du pneumatique entre le point F et le point C, définis ci-dessus, qui conduit à une modification dudit profil entre la zone liant le flanc au bourrelet d'un pneumatique ladite zone permettant d'augmenter la partie du flanc présentant une épaisseur D constante. Selon les inventeurs un tel profil conduirait à des déformations plus homogènes du pneumatique lors de contacts avec les bordures de trottoir et permettrait de limiter les risques d'abrasion et/ou d'arrachement au niveau de la surface extérieure du pneumatique. En effet, lors d'un choc avec une bordure de trottoir, la zone de contact du pneumatique est effectivement la surface extérieure de celui-ci et plus particulièrement la zone située entre les points F et A tels que définis précédemment. L'épaisseur constante D du flanc semble permettre une déformation plus homogène et ainsi une meilleure répartition des efforts subis en cas de choc ou frottement sur une bordure de trottoir.

Les inventeurs ont encore su mettre en évidence que le profil de la surface extérieure du pneumatique selon l'invention entre le point F et le point C peut encore éviter des problèmes d'endommagement dans le cas de pneumatiques en monte jumelés. En effet, ils ont montré que le profil du pneumatique favorise l'évacuation de cailloux qui pourraient venir se coincer entre les pneumatiques avant que lesdits cailloux ne causent des dommages dans la zone du bourrelet du pneumatique.

Les inventeurs ont toutefois su mettre en évidence que lors de roulage sur des cailloux de tailles particulièrement élevées, notamment lorsqu'ils viennent en appui sur le bord de la bande de roulement du pneumatique, si l'armature de sommet selon l'invention est favorable à l'endurance du sommet du pneumatique, le profil du pneumatique au niveau de la zone du bourrelet induit des flexions importantes et localisées qui associées à ladite armature de sommet du pneumatique selon l'invention favorisent une mise en compression des éléments de renforcement de l'armature carcasse.

Les inventeurs ont fait le constat que les éléments de renforcement de la couche d'armature de carcasse selon l'invention, qui présentent au test dit de perméabilité un débit inférieur à 20 cm$^3$/min, confèrent du fait de la présence du mélange caoutchouteux au sein des éléments de renforcement un comportement en compression qui autorise l'association de l'armature de sommet du pneumatique selon l'invention et du profil du pneumatique au niveau de la zone du bourrelet.

Selon une variante avantageuse de l'invention, la distance radiale entre le point F et le point A est supérieure à 80% de la distance radiale entre le point F et le point G radialement le plus extérieur de la surface extérieure S du pneumatique, pour lequel la distance, mesurée selon une direction normale à la partie principale de la couche d'armature de carcasse, entre ladite partie principale de la couche d'armature de carcasse et la surface S est égale à D, ladite distance entre tout point, de la surface extérieure S du pneumatique, radialement compris entre les points F et G et la partie principale de la couche d'armature de carcasse étant constante.

Selon cette variante avantageuse de l'invention, le profil du flanc ainsi défini semble conférer une encore meilleure homogénéité de la déformation en cas de choc et/ou frottement sur une bordure de trottoir.

Avantageusement selon l'invention, le ratio d'utilisation du potentiel de rupture F2/FR2 de la couche de travail radialement la plus extérieure est inférieur à 1/6, et dans lequel :

FR2 est la force rupture en extension uniaxiale de chacun des câbles de la couche de travail radialement la plus extérieure,

$$F2 = p_2 * Tc * [(\tan(|\alpha 1|)/(\tan(|\alpha 1|)+\tan(|\alpha 2|))) / \cos^2(|\alpha 2|) + C_F],$$

avec

$$Tc = 0.092 * P * Rs * (1-(Rs^2-R_L^2)/(2*Rt*Rs)),$$

P : la pression de gonflage nominale du pneumatique selon l'ETRTO,

$$C_F = 0.00035*(\min((L\text{-}80) / \sin(|\alpha 1|), (L\text{-}80) / \sin(|\alpha 2|), 480)\text{-}480),$$

$p_2$ : le pas de pose des éléments de renforcement de la couche de sommet de travail radialement la plus extérieure, mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus intérieure,

$R_L$ : moyenne des rayons des points axialement les plus à l'extérieur de la partie principale de la couche d'armature de carcasse de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur axiale de la bande de roulement.

L'épaisseur Es et le pas $p_2$ sont mesurés sur une coupe du pneumatique et sont exprimés en millimètres.
Les inventeurs font encore le constat que le choix de la valeur absolue de la différence entre les valeurs absolues des angles précités $\alpha 1$ et $\alpha 2$ associé à l'angle moyen $\alpha$ et au ratio d'utilisation du potentiel de rupture F2/FR2 tels que définis selon cette réalisation avantageuse de l'invention peuvent permettre d'éliminer la couche de protection usuellement mise en place radialement à l'extérieur des autres couches de l'armature de sommet. Une telle couche est habituellement présente pour être sacrifiée en cas d'agressions du pneumatique de type coupures pouvant venir altérer l'intégrité d'éléments de renforcement métalliques par des phénomènes de corrosion associés à la fatigue desdits éléments de renforcement. Les inventeurs font effectivement le constat que les éléments de renforcement de la couche de sommet de travail radialement la plus extérieure, d'un pneumatique selon l'invention, sont moins sollicités lors du gonflage du pneumatique ou bien lors de son utilisation en roulage normal que les éléments de renforcement d'une couche de sommet de travail radialement la plus extérieure d'un pneumatique plus usuel ; un tel pneumatique plus usuel présente des différences d'angles en valeur absolue entre les éléments de renforcement des différentes couches de travail plus petites, un angle des éléments de renforcement de la couche de travail radialement la plus intérieure supérieur ou égal en valeur absolue à celui des éléments de renforcement de la couche de travail radialement la plus extérieure et un ratio d'utilisation du potentiel de rupture F2/FR2 plus important. Les éléments de renforcement de la couche de sommet de travail radialement la plus extérieure d'un pneumatique selon l'invention présentent ainsi des propriétés d'endurance bien supérieures à ceux d'un pneumatique plus usuel ; les inventeurs font ainsi le constat que la suppression de la couche de protection est rendue possible et permet de contribuer à l'allègement du pneumatique.
Selon un mode de réalisation préféré de l'invention, la valeur absolue de la différence entre les valeurs absolues des angles $\alpha 2$ et $\alpha 1$ est supérieure ou égale à 11° et de préférence supérieure à 14°. Selon ce mode de réalisation, et conformément aux interprétations données ci-dessus, il va être possible d'améliorer encore les performances d'endurance des éléments de renforcement de la couche de travail radialement la plus extérieure et/ou améliorer encore les performances du pneumatique à l'égard de chocs tels que ceux subis lors de roulage sur des sols caillouteux.
Avantageusement encore selon l'invention, le ratio d'utilisation du potentiel de rupture F2/FR2 de la couche de travail radialement la plus extérieure est inférieur à 1/8. Un tel ratio d'utilisation du potentiel de rupture F2/FR2 contribue encore à améliorer les performances d'endurance des éléments de renforcement de la couche de travail radialement la plus extérieure lors de l'utilisation du pneumatique.
De préférence selon l'invention, le ratio d'utilisation du potentiel de rupture F1/FR1 de la couche de travail radialement la plus intérieure est inférieur à 1/3, dans lequel :

FR1 est la force rupture en extension uniaxiale de chacun des câbles de la couche de travail radialement la plus intérieure,

$$F1 = p_1 * Tc * [(\tan(|\alpha 2|)/(\tan(|\alpha 1|) + \tan(|\alpha 2|))) / \cos^2(|\alpha 1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel.

De préférence encore, le ratio d'utilisation du potentiel de rupture F1/FR1 de la couche de travail radialement la plus intérieure est au moins 30 % supérieur au ratio d'utilisation du potentiel de rupture F2/FR2 de la couche de travail radialement la plus extérieure.

Selon un mode de réalisation de l'invention, les éléments de renforcement des couches de sommet de travail sont des câbles métalliques inextensibles.

Selon un mode de réalisation préféré de l'invention, optimisant l'amincissement du sommet du pneumatique, les deux couches de sommet de travail sont seules présentes pour constituer l'armature de sommet sur la totalité de la largeur axiale de l'armature sommet.

Selon un mode de réalisation préféré de l'invention, les câbles de l'armature de carcasse présentent au test dit de perméabilité un débit inférieur à 10 cm$^3$/min et de préférence encore inférieur à 2 cm$^3$/min.

Selon un mode de réalisation avantageux de l'invention, les éléments de renforcement métalliques de ladite couche de l'armature de carcasse sont des câbles, de préférence non fretté, à au moins deux couches, au moins une couche interne étant gainée d'une couche constituée d'une composition de caoutchouc non réticulable, réticulable ou réticulée, de préférence à base d'au moins un élastomère diénique.

L'invention propose encore un pneumatique destiné à être monté sur une jante creuse de type 15° drop center, comprenant une armature de carcasse radiale, constituée d'une unique couche d'armature de carcasse formée d'éléments de renforcement, ledit pneumatique comprenant une armature de sommet comprenant deux couches de sommet de travail d'éléments de renforcement croisés d'une couche à l'autre en faisant avec la direction circonférentielle des angles ($\alpha 1$, $\alpha 2$) compris entre 8° et 45°, lesdits angles $\alpha 1$ et $\alpha 2$ étant orientés de part et d'autre de la direction circonférentielle, l'armature de sommet étant coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement d'armature de carcasse étant renforcé par au moins une couche d'éléments de renforcement ou raidisseur, lesdites deux couches de sommet de travail étant seules présentes pour constituer l'armature de sommet sur au moins 75% de la largeur axiale de l'armature sommet, les éléments de renforcement de la couche de travail radialement la plus extérieure formant un angle $\alpha 2$ avec la direction circonférentielle supérieur en valeur absolue à l'angle $\alpha 1$ formé par les éléments de renforcement de la couche de travail radialement la plus intérieure avec la direction circonférentielle, la valeur absolue de la différence entre les valeurs absolues des angles $\alpha 2$ et $\alpha 1$ étant supérieure à 8°, l'angle moyen $\alpha$ satisfaisant la relation :

$$13 + 131 * \exp(-L/100) < \alpha < 20 + 164 * \exp(-L/100),$$

$\alpha$ étant défini par la relation $\alpha = \text{Arctan}((\tan(|\alpha 1|) * \tan(|\alpha 2|))^{1/2})$, L étant la largeur maximum du pneumatique mesurée selon la direction axiale et exprimée en mm, les éléments de renforcement métalliques de ladite couche d'armature de carcasse étant des câbles, de préférence non fretté, à au moins deux couches, au moins une couche interne étant gainée d'une couche constituée d'une composition de caoutchouc non réticulable, réticulable ou réticulée, de préférence à base d'au moins un élastomère diénique et, dans une coupe méridienne dudit pneumatique,

- tout point du profil de la surface extérieure S du pneumatique, entre un premier point F, lui-même défini par l'intersection d'une droite d'orientation axiale, passant par le point E axialement le plus extérieur de la partie principale de la couche d'armature de carcasse et la surface extérieure S du pneumatique, et un point A est à une distance D, constante, de la partie principale de la couche d'armature de carcasse, ladite distance étant mesurée en tout point selon une direction normale à la partie principale de la couche d'armature de carcasse,

- le point A est radialement extérieur à un premier cercle C1 de rayon R1 centré sur l'extrémité du retournement de la couche d'armature de carcasse, R1 étant compris entre 6 et 15 mm,

- radialement à l'intérieur du point A, la surface extérieure S du pneumatique se prolonge par un arc de cercle de rayon R2 supérieur à R1 et dont le centre est axialement extérieur à la surface S du pneumatique,

- l'arc de cercle de rayon R2 est tangent à son extrémité radialement la plus intérieure B à un arc de cercle de rayon R1 centré sur l'extrémité radialement la plus extérieure du raidisseur, prolongeant la surface extérieure S du pneumatique radialement vers l'intérieur jusqu'au point C, axialement le plus extérieur d'un deuxième cercle C2 de rayon R1 centré sur l'extrémité radialement la plus extérieure du raidisseur.

Au sens de l'invention, des câbles métalliques à au moins deux couches, au moins une couche interne étant gainée d'une couche constituée d'une composition de caoutchouc non réticulable, réticulable ou réticulée présentent au test dit de perméabilité un débit quasi nul et donc inférieur à 20 cm3/min.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que lorsque la composition de caoutchouc de cette gaine est réticulable ou réticulée, elle comprend par définition un système de réticulation adapté pour permettre la réticulation de la composition lors de sa cuisson (i.e., son durcissement et non sa fusion) ; ainsi, cette composition de caoutchouc peut alors être qualifiée d'infusible, du fait qu'elle ne peut pas être fondue par chauffage à quelque température que ce soit.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement d'au moins une couche de l'armature de carcasse sont des câbles métalliques à couches de construction [L+M] ou [L+M+N], comportant une première couche C1 à L fils de diamètre $d_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant éventuellement entourée d'une couche externe C3 de N fils de diamètre $d_3$ enroulés ensemble en hélice selon un pas $p_3$ avec N allant de 8 à 20, une gaine constituée d'une composition de caoutchouc non réticulable, réticulable ou réticulée à base d'au moins un élastomère diénique, recouvrant, dans la construction [L+M], ladite première couche C1 et, dans la construction [L+M+N], au moins ladite couche C1 et/ou au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

D'une manière générale, lesdits câbles métalliques d'au moins une couche de l'armature de carcasse selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lesdits câbles métalliques d'au moins une couche de l'armature de carcasse selon l'invention pourront être obtenus selon différentes techniques connues de l'homme du métier, par exemple en deux étapes, tout d'abord par gainage via une tête d'extrusion de la couche C1 ou de l'âme ou structure intermédiaire L+M (couches C1+C2), étape suivie dans un deuxième temps d'une opération finale de câblage ou retordage des M+N fils des couches C2 et C3 autour de la couche C1 préalablement gainée ou des N fils de la couche C3 autour de la couche C2 préalablement gainée.

Selon un mode de réalisation préféré de l'invention, l'extrémité radialement la plus extérieure du raidisseur est radialement extérieure à l'extrémité du retournement de la couche d'armature de carcasse. Une telle réalisation permet d'une part d'éviter la coïncidence des extrémités respectives du raidisseur et du retournement de la couche d'armature de carcasse, lesdites extrémités étant radialement décalées. D'autre part le raidisseur assure pleinement une fonction de protection du retournement de la couche d'armature de carcasse notamment au regard du contact avec le crochet de jante et des appuis sur celui-ci lorsque le pneumatique est en roulage.

Selon d'autres modes de réalisation, l'extrémité radialement la plus extérieure du raidisseur est radialement intérieure à l'extrémité du retournement de la couche d'armature de carcasse.

Concernant l'extrémité radialement la plus intérieure du raidisseur, elle peut être radialement extérieure au point radialement le plus intérieur de la tringle. Selon d'autres modes de réalisation, le raidisseur peut être engagé radialement sous la tringle, et son extrémité radialement la plus intérieure est alors radialement intérieure à la tringle. Selon encore d'autres modes de réalisation le raidisseur peut être enroulé autour de la tringle et son extrémité radialement la plus intérieure est alors axialement intérieure à la couche d'armature de carcasse.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Selon d'autres variantes de réalisation de l'invention décalant le compromis de performance du pneumatique de façon moins favorable pour ce qui concerne l'allègement, l'armature de sommet comporte une couche supplémentaire, dite de protection, radialement extérieure aux couches de sommet de travail, de préférence centrée sur le plan médian circonférentiel. Les éléments de renforcements d'une telle couche de protection sont de préférence des éléments de renforcement dits élastiques, orientés par rapport à la direction circonférentielle avec un angle compris entre 8° et 45° et de même sens que l'angle formé par les éléments de renforcement de la couche de travail qui lui est radialement adjacente. De préférence encore, les éléments de renforcements d'une telle couche de protection sont parallèles aux éléments de renforcement de la couche de travail qui lui est radialement adjacente.

D'autres variantes peuvent encore prévoir que l'armature de sommet peut être complétée entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse. Avantageusement, ladite couche de triangulation est constituée de deux demi-couches positionnées axialement de part et d'autre du plan médian circonférentiel.

D'autres détails et caractéristiques avantageux de l'invention ressortiront ci-après de la description des exemples de réalisation de l'invention notamment en référence aux figures 1 à 3 qui représentent :

- figure 1, une vue méridienne d'un schéma d'un pneumatique selon l'invention,

- figure 2, une représentation schématique agrandie de la surface extérieure du pneumatique entre la zone du bourrelet et le point F,

- figure 3, une représentation schématique agrandie de la zone d'un bourrelet d'un pneumatique de référence.

Les figures ne sont pas représentées à l'échelle pour en simplifier la compréhension.

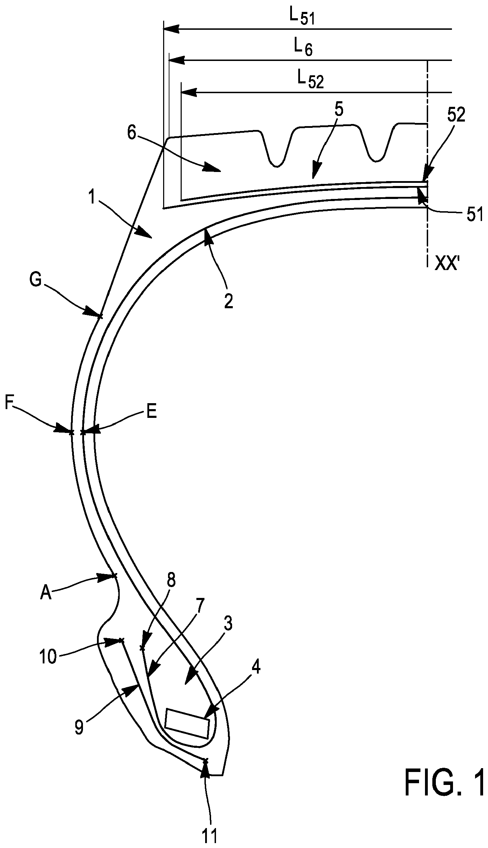

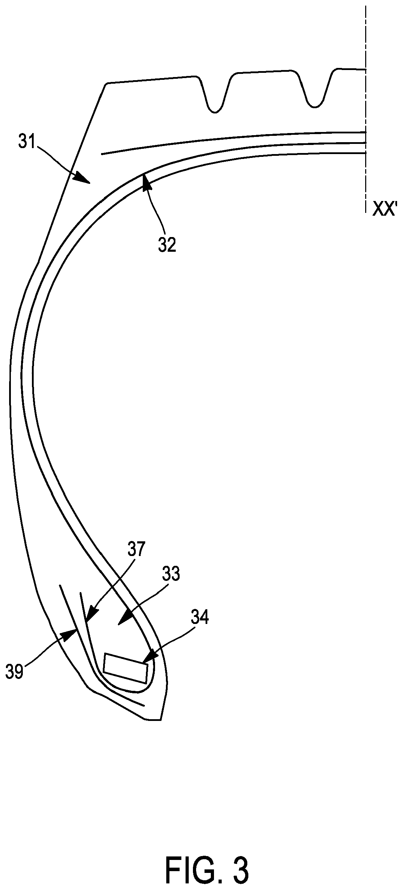

Les figures 1 et 3 ne représentent qu'une demi-vue d'un pneumatique qui se prolonge de manière symétrique par rapport à l'axe XX' qui représente le plan médian circonférentiel, ou plan équatorial, du pneumatique.

Sur la figure 1, le pneumatique 1 est de dimension 12 R 22.5. Ledit pneumatique 1 comprend une armature de carcasse radiale 2 ancrée dans deux bourrelets 3. L'armature de carcasse 2 est formée d'une seule couche de câbles métalliques. Il comporte encore une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement 7 de la couche d'armature de carcasse présentant une extrémité 8.

Axialement à l'extérieur du retournement 7, on trouve un raidisseur 9 dont l'extrémité radialement la plus extérieure 10 est radialement extérieure à l'extrémité 8 du retournement 7 de la couche d'armature de carcasse.

Le raidisseur 9 est engagé sous la tringle 4 de sorte que son extrémité radialement la plus intérieure 11 est radialement intérieure à la tringle 4.

Les éléments de renforcement de la couche d'armature de carcasse 2 sont des câbles à couche de structure 1+6+12, non fretté, constitué d'un noyau central formé d'un fil, d'une couche intermédiaire formée de six fils et d'une couche externe formée de douze fils.

Ils présentent les caractéristiques suivantes (d et p en mm) :

- structure 1+6+12 ;
- di = 0.20 (mm);
- $d_2$ = 0. 18 (mm);
- $p_2$ = 10 (mm)
- $d_3$ = 0.18 (mm);
- $p_3$ = 10 (mm),
- $(d_2 / d_3)$ = 1 ;

avec $d_1$ le diamètre du fil du noyau, $d_2$, $p_2$, respectivement le diamètre et le pas d'hélice des fils de la couche intermédiaire et $d_3$ et $p_3$, respectivement le diamètre et le pas d'hélice des fils de la couche externe.

L'âme du câble constitué du noyau central formé d'un fil et de la couche intermédiaire formée de six fils est gainée par une composition de caoutchouc à base d'élastomère diénique non vulcanisé (à l'état cru). Le gainage est obtenu via une tête d'extrusion de l'âme, suivi d'une opération finale de retordage ou câblage des 12 fils formant la couche externe autour de l'âme ainsi gainée.

Le câble présente au test dit de perméabilité, tel que décrit précédemment un débit égal à 0 cm$^3$/min et donc inférieur à 2 cm$^3$/min. Sa pénétration par la composition de caoutchouc est supérieure à 98 %.

Le câble présente un diamètre égal à 0.95 mm.

La composition élastomérique constituant la gaine de caoutchouc est réalisée à partir d'une composition telle que décrite précédemment.

Sur la figure 1, l'armature de carcasse 2 est frettée conformément à l'invention par une armature de sommet 5, formée radialement de l'intérieur à l'extérieur :

- d'une première couche de travail 51 formée de câbles métalliques orientés d'un angle égal à 16°,

- d'une deuxième couche de travail 52 formée de câbles métalliques orientés d'un angle égal à 30° et croisés avec les câbles métalliques de la première couche de travail 51, les câbles de chacune des couches de travail 51, 52 étant orientés de part et d'autre de la direction circonférentielle.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2 mm.

Le pneumatique est gonflé à une pression de 8.5 bars.

La largeur axiale $L_{51}$ de la première couche de travail 51 est égale à 215 mm.

La largeur axiale $L_{52}$ de la deuxième couche de travail 52 est égale à 195 mm.

La largeur axiale de la bande de roulement $L_6$ est égale à 210 mm.

La largeur axiale L est égale à 302 mm.

La masse cumulée des deux couches de travail 51, 52, comprenant la masse des câbles métalliques et des mélanges de calandrage, se monte ainsi à 7.1 Kg.

La différence entre les angles formés par les câbles de la première couche de sommet de travail avec la direction circonférentielle et ceux des câbles de la deuxième couche de sommet de travail est égale à 14°.

L'angle moyen est égal à 22.1° et est bien compris entre 19.4° et 28°.

La valeur mesurée de Re est égale à 541.7 mm.

La valeur mesurée de Es est égale à 22.3 mm.

La valeur moyenne RL des rayons mesurés est égale à 410 mm.

La valeur Rt déterminée sur le pneumatique est égale à 900 mm.

La valeur calculée de Tc est égale à 362 N/mm.

La valeur calculée de $C_F$ est égale à -0.013.

La valeur de F1 est égale à 514.4 N.

La valeur de F2 est égale à 311.2 N.

Les forces ruptures des éléments de renforcement des couches de sommet de travail FR1 et FR2 sont égales à 2600 N.

Le ratio d'utilisation du potentiel de rupture F2/FR2 est égal à 12 %.

Le ratio d'utilisation du potentiel de rupture F1/FR1 est égal à 19.8 %.

Le ratio d'utilisation du potentiel de rupture F1/FR1 est 65 % supérieur au ratio d'utilisation du potentiel de rupture F2/FR2.

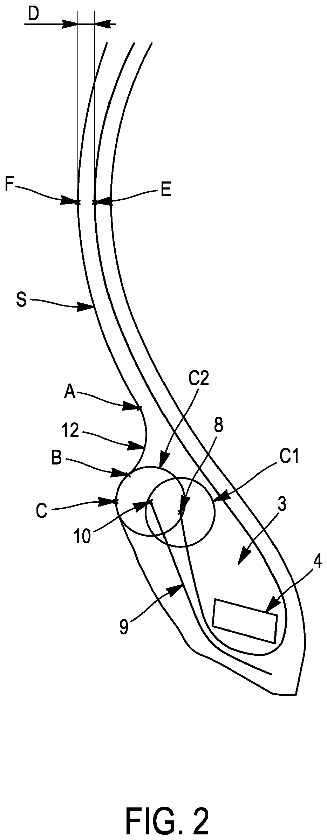

La figure 2 illustre schématiquement la surface extérieure S du pneumatique ente le point F et la zone du bourrelet 3 sur une coupe méridienne du pneumatique, définie de sorte que les barycentres des tringles 4 forment une droite orientée axialement, lesdits barycentres étant distants l'un de l'autre d'une distance égale à la largeur de la jante nominale augmentée de 20 mm et diminuée de deux fois la distance mesurée axialement entre un barycentre d'une tringle 4 et un point de la surface extérieure du pneumatique.

Le point E axialement le plus extérieur de la carcasse est, par exemple, déterminé par tomographie, le pneumatique étant monté/gonflé dans les conditions nominales.

Le point F est ensuite déterminé par une projection axiale du point E sur la surface extérieure S du pneumatique.

La surface extérieure S du pneumatique décrit une première portion depuis le point F jusqu'au point A, celui-ci étant radialement extérieur au premier cercle C1, de rayon R1 centré sur l'extrémité 8 du retournement de la couche d'armature de carcasse.

La distance D mesurée entre tout point de la surface extérieure S du pneumatique et la partie principale de la couche d'armature de carcasse, ladite distance étant mesurée en tout point selon une direction normale à la partie principale de la couche d'armature de carcasse est égale à 4.8 mm et sensiblement constante sur cette portion comprise entre les points F et A.

Le rayon R1 du premier cercle C1 est égal à 9.7 mm.

La surface extérieure S du pneumatique se prolonge ensuite radialement vers l'intérieur par un arc de cercle 12 de rayon R2, lui-même tangent en B à un arc de cercle, partie du deuxième cercle C2 de rayon R1 centré sur l'extrémité 10 du raidisseur 9, le dit arc de cercle prolongeant la surface extérieure S du pneumatique jusqu'au point C, point axialement le plus extérieur du bourrelet 4.

Le rayon R2 est égal à 15 mm.

La distance radiale entre le point F et le point A est égale à 58 mm.

Le point G, visible sur la figure 1 est le point, radialement extérieur au point F, à partir duquel la distance entre un point de la surface extérieure S du pneumatique et la partie principale de la couche d'armature de carcasse, mesurée en tout point selon une direction normale à la partie principale de la couche d'armature de carcasse, est supérieure à la distance D.

La distance radiale entre le point F et le point G est égale à 48 mm.

La distance radiale entre le point F et le point A est donc bien supérieure à 80% de la distance radiale entre le point F et le point G.

Les pneumatique I selon l'invention sont comparés à différents pneumatiques de référence de même dimension.

Des premiers pneumatiques de référence T1 diffèrent du pneumatique I selon l'invention par la nature des éléments de renforcement de la couche d'armature de carcasse. Les éléments de renforcement de la couche d'armature de carcasse de ce premier pneumatique de référence T1 sont des câbles à couche de structure 1+6+12, non fretté, identiques à ceux du pneumatique I selon l'invention, l'âme de ceux-ci n'étant pas gainée par une composition de caoutchouc.

De tels câbles présentent au test dit de perméabilité, tel que décrit précédemment un débit égal à 40 cm$^3$/min. Leur pénétration par la composition de caoutchouc est égale à 66 %.

Des deuxièmes pneumatiques de référence T2 diffèrent des pneumatiques de référence T1 par une armature de sommet formée radialement de l'intérieur à l'extérieur :

- d'une couche de triangulation, constituée de deux demi-nappes, formées de câbles métalliques orientés d'un angle égal à 65°,

- d'une première couche de travail formée de câbles métalliques orientés d'un angle égal à 18°, du même côté que les câbles de la couche de triangulation par rapport à la direction circonférentielle,

- d'une seconde couche de travail formée de câbles métalliques orientés d'un angle égal à 18° et croisés avec les câbles métalliques de la première couche de travail, les câbles de chacune des couches de travail étant orientés de part et d'autre de la direction circonférentielle,

- d'une couche de protection formées de câbles métalliques élastiques 6.35, dont la distance entre les éléments de renforcement, mesurée selon la normale à la direction de la ligne moyenne du câble est égal à 2.5 mm, orientés d'un angle égal à 18°, du même côté que les câbles de la seconde couche de travail.

Les câbles métalliques des deux couches de travail et de la couche de triangulation sont des câbles de formule 9.35. Ils sont répartis dans chacune des couches de travail avec une distance entre les éléments de renforcement, mesurée selon la normale à la direction de la ligne moyenne du câble égale à 2.0 mm.

Le pneumatique de référence est gonflé à une pression de 8.5 bars.

La largeur axiale de la couche triangulation est égale à 200 mm.

La largeur axiale de la première couche de travail est égale à 215 mm.

La largeur axiale de la deuxième couche de travail est égale à 195 mm.

La largeur axiale de la couche de protection est égale à 136 mm.

La masse cumulée des couches de travail, de la couche de protection et de la couche de triangulation des pneumatiques de référence R2, comprenant la masse des câbles métalliques et des mélanges de calandrage, se monte à 10.4 Kg.

La valeur absolue de la différence entre les valeurs absolues des angles formés par les câbles de la première couche de sommet de travail avec la direction circonférentielle et ceux des câbles de la deuxième couche de sommet de travail est nulle, les angles étant identiques, contrairement à l'invention.

L'angle moyen est égal à 18°.

La valeur de F1 est égale à 540 N.

La valeur de F2 est égale à 490 N.

Les valeurs F1 et F2 sont obtenues par une simulation éléments finis, le nombre élevés de nappes de renforcement dans le sommet ne permettant pas l'utilisation d'un modèle analytique simple.

Les forces ruptures des éléments de renforcement des couches de sommet de travail FR1 et FR2 sont égales à 2600 N.

Le ratio d'utilisation du potentiel de rupture F2/FR2 est égal à 18.9 %.

Le ratio d'utilisation du potentiel de rupture F1/FR1 est égal à 20.7 %.

Le ratio d'utilisation du potentiel de rupture F1/FR1 est 9.5 % supérieur au ratio d'utilisation du potentiel de rupture F2/FR2.

Des troisièmes pneumatiques de référence T3 diffèrent du pneumatique I selon l'invention par un profil de la surface extérieure plus usuel et des quatrièmes pneumatiques de référence T4 diffèrent des pneumatiques de référence T2 également par un profil de la surface extérieure plus usuel. Un tel profil de pneumatique est représenté sur la figure 3.

Sur cette figure 3 qui représente un pneumatique 31 de même dimension, il apparaît que la zone du bourrelet 33 est semblable à celle du pneumatique selon l'invention et que la structure de la couche d'armature de carcasse 32 est identique, celle-ci étant retournée autour d'une tringle 34 pour former un retournement 37 renforcé par un raidisseur 39. Par contre, le profil de la surface extérieure du pneumatique 31 est différent de celui du pneumatique selon l'invention.

Des essais ont été réalisés avec des pneumatiques I réalisés selon l'invention et avec les pneumatiques de référence T1, T2, T3 et T4.

Des essais d'endurance ont été réalisés en faisant rouler deux pneus rabotés l'un sur l'autre avec une pression régulée de 5.5b, et une charge de 4571 daN à une vitesse de 50km/h et à une température ambiante de 15°C pendant 20000 km.

Les essais ont été réalisés pour les pneumatiques selon l'invention avec des conditions identiques à celles appliquées aux pneumatiques de référence T1, T2, T3 et T4.

L'ensemble des pneumatiques de référence et les pneumatiques selon l'invention présentent des résultats sensiblement identiques.

Des deuxièmes essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 3550 daN progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence T1, T2, T3 et T4. Il apparaît donc que les pneumatiques selon l'invention et les pneumatiques de référence T1 et T3 présentent des performances sensiblement équivalentes en termes d'endurance des zones des bourrelets des pneumatiques et de l'armature sommet à celles des pneumatiques de référence T2 et T4, lors de roulage sur des sols bitumineux.

Un autre type d'essais a été mené pour tester les performances de résistance aux chocs et/ou frottements sur des bordures de trottoir.

Pour réaliser ces essais les pneumatiques sont en outre pourvus de stries radiales sur leur flanc.

Ces essais sont réalisés sur un trottoir présentant une bordure de 15 cm de hauteur. Le pneumatique est monté sur un véhicule dont la trajectoire conduit le pneumatique à une vitesse de 20 km/h avec un angle d'incidence par rapport au trottoir de 10°.

L'opération est répétée 6 fois et ensuite le flanc est analysé pour observer les éventuels arrachements.

L'ensemble des pneumatiques présentent deux arrachements.

Concernant la surface agressée par le trottoir, elle est 10% plus faible sur le pneumatique selon l'invention et sur les pneumatiques de référence T1 et T2 en comparaison des pneumatiques de référence T3 et T4.

Des tests visant à caractériser la résistance à la rupture d'une armature de sommet de pneumatique soumise à des chocs ont également été réalisés. Ces tests consistent à faire rouler un pneumatique, gonflé à une pression recommandée et soumis à une charge recommandée, sur un obstacle ou indenteur cylindrique de diamètre égal à 1.5 pouce, soit 38.1 mm, à tête hémisphérique, et d'une hauteur déterminée, venant en appui au centre de la bande de roulement. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet. Les valeurs expriment l'énergie nécessaire pour obtenir la rupture du bloc sommet. Les valeurs sont exprimées à partir d'une base 100 correspondant à la valeur mesurée pour le pneumatique de référence R4.

| | |
|---|---|
| Référence T4 | 100 |
| Référence T3 | 115 |

**EP 3 980 283 B1**

(suite)

| | |
|---|---|
| Référence T2 | 100 |
| Référence T1 | 115 |
| Invention I | 115 |

Ces résultats montrent que malgré un allégement du pneumatique, notamment par une diminution de la masse de son armature sommet, l'énergie à rupture lors d'un choc sur la surface de la bande de roulement des pneumatiques selon l'invention ou des pneumatiques de référence T1 et T3 est significativement supérieure à celle des pneumatiques de référence T4 et T2.

Des derniers tests visant à caractériser la résistance à la rupture d'une armature de sommet de pneumatique soumise à des chocs particuliers ont encore été réalisés. Ces tests consistent à faire rouler à 40 km/h pendant 40 000 km sur un volant un pneumatique, gonflé à une pression nominale selon l'ETRTO et soumis à une charge nominale selon l'ETRTO, sur des obstacles sphériques de rayon 26 mm, tronqués à 21 mm, séparés d'environ 2.50 mètres, qui viennent en appui sur le bord de la bande de roulement, la position axiale du centre des obstacles étant située à 10 mm vers le centre du point à partir duquel la tangente à la surface extérieure de la bande de roulement fait un angle supérieur ou égal à 30° avec la direction axiale. On extrait six morceaux de câbles de la couche d'armature de carcasse de longueur 150 mm, les morceaux étant centrés sur l'extrémité de la couche de sommet de travail axialement la plus large. On mesure la force rupture des câbles selon un test de traction uniaxiale et on fait une moyenne à partir des mesures effectuées sur les six morceaux de câbles extraits du pneumatique. Les valeurs sont exprimées à partir d'une base 100 correspondant à la valeur mesurée pour le pneumatique de référence T1.

| | |
|---|---|
| Référence T1 | 100 |
| Référence T2 | 105 |
| Référence T3 | 105 |
| Référence T4 | 100 |
| Invention I | 112 |

Ces résultats montrent que malgré un allégement du pneumatique, notamment par une diminution de la masse de son armature sommet, les performances d'endurance des câbles de la couche d'armature de carcasse des pneumatiques selon l'invention sont significativement améliorées en modifiant leur comportement en compression en comparaison des pneumatiques de référence T1 au point d'avoir une performance supérieure à celles de pneumatiques de référence T2 et T4 qui ont des armatures de sommet plus classiques. La comparaison des pneumatiques selon l'invention et des pneumatiques de référence T3 qui ne diffèrent que par le profil extérieur à proximité de la jante met en évidence l'intérêt de combiner des câbles de l'armature de carcasse dont l'âme est gainée avec le profil de la surface extérieure au niveau de la zone du bourrelet du pneumatique conforme à l'invention.

Un autre pneumatique I2, conforme à l'invention a également été testé. Ce pneumatique I2 diffère du pneumatique I par la nature des éléments de renforcement de la couche d'armature de carcasse. Les éléments de renforcement de la couche d'armature de carcasse de ce pneumatique I2 sont des câbles à couche de structure 1+6+11, non fretté, constitué d'un noyau central formé d'un fil, d'une couche intermédiaire formée de six fils et d'une couche externe formée de onze fils.

Ils présentent les caractéristiques suivantes (d et p en mm) :

- structure 1+6+11 ;
- $d_1$ = 0.20 (mm);
- $d_2$ = 0.175 (mm);
- pz = 7 (mm)
- $d_3$ = 0.175 (mm);
- $p_3$ = 10 (mm),
- $(d_2 / d_3)$ = 1 ;

avec $d_1$ le diamètre du fil du noyau, $d_2$, $p_2$, respectivement le diamètre et le pas d'hélice des fils de la couche intermédiaire et $d_3$ et $p_3$, respectivement le diamètre et le pas d'hélice des fils de la couche externe.

L'âme du câble constitué du noyau central formé d'un fil et de la couche intermédiaire formée de six fils n'est pas gainée par une composition de caoutchouc.

De tels câbles présentent au test dit de perméabilité, tel que décrit précédemment un débit égal à 5 cm$^3$/min. Sa pénétration par la composition de caoutchouc est égale à 98 %.

Lors des tests visant à caractériser la résistance à la rupture de l'armature de sommet de pneumatique soumise à des chocs particuliers en appui sur le bord de la bande de roulement, la mesure de la force rupture des câbles à partir d'une base 100 correspondant à la valeur mesurée pour le pneumatique de référence T1 est égale à 107.

**Revendications**

1.  Pneumatique (1), destiné à être monté sur une jante creuse de type 15° drop center, comprenant une armature de carcasse radiale (2), constituée d'une unique couche d'armature de carcasse formée d'éléments de renforcement, ledit pneumatique comprenant une armature de sommet (5), comprenant deux couches de sommet de travail d'éléments (51, 52) de renforcement croisés d'une couche à l'autre en faisant avec la direction circonférentielle des angles ($\alpha$1, $\alpha$2) compris entre 8° et 45°, lesdits angles $\alpha$1 et $\alpha$2 étant orientés de part et d'autre de la direction circonférentielle, l'armature de sommet (5) étant coiffée radialement d'une bande de roulement (6), ladite bande de roulement étant réunie à deux bourrelets (3) par l'intermédiaire de deux flancs, la couche d'armature de carcasse étant ancrée dans chacun des bourrelets par retournement autour d'une tringle pour former une partie principale de la couche d'armature de carcasse s'étendant d'une tringle à l'autre et un retournement (7) de la couche d'armature de carcasse dans chacun des bourrelets, ledit retournement d'armature de carcasse étant renforcé par au moins une couche d'éléments de renforcement ou raidisseur (9), **caractérisé en ce que** :

    - lesdites deux couches de sommet de travail (51, 52) sont seules présentes pour constituer l'armature de sommet (5) sur au moins 75 % de la largeur axiale de l'armature de sommet (5),
    - **en ce que** les éléments de renforcement de la couche de sommet de travail (52) radialement la plus extérieure forment un angle ($\alpha$2) avec la direction circonférentielle supérieur en valeur absolue à l'angle ($\alpha$1) formé par les éléments de renforcement de la couche de sommet de travail (51) radialement la plus intérieure avec la direction circonférentielle,
    - **en ce que** la valeur absolue de la différence entre les valeurs absolues des angles ($\alpha$2) et ($\alpha$1) est supérieure à 8°,
    - **en ce que** l'angle moyen $\alpha$ satisfait la relation :

    $$13+131*\exp(-L/100) < \alpha < 20+164*\exp(-L/100),$$

    $\alpha$ étant défini par la relation $\alpha$ = Arctan((tan($|\alpha1|$)*tan($|\alpha2|$))$^{1/2}$), L étant la largeur maximum du pneumatique mesurée selon la direction axiale et exprimée en mm,
    - **en ce que** les éléments de renforcement métalliques de ladite couche d'armature de carcasse sont des câbles présentant au test dit de perméabilité suivant la norme ASTM D2692-98 un débit inférieur à 20 cm$^3$/min, et
    - **en ce qu'**un mélange caoutchouteux est présent au moins localement au sein de la structure desdits câbles,

    **et en ce que** dans chacun des bourrelets, dans une coupe méridienne dudit pneumatique :

    - tout point du profil de la surface extérieure S du pneumatique, entre un premier point F, lui-même défini par l'intersection d'une droite d'orientation axiale, passant par le point E axialement le plus extérieur de la partie principale de la couche d'armature de carcasse et la surface extérieure S du pneumatique, et un point A est à une distance D, constante, de la partie principale de la couche d'armature de carcasse, ladite distance étant mesurée en tout point selon une direction normale à la partie principale de la couche d'armature de carcasse,
    - le point A est radialement extérieur à un premier cercle C1 de rayon R1 centré sur l'extrémité du retournement de la couche d'armature de carcasse, R1 étant compris entre 6 et 15 mm,
    - radialement à l'intérieur du point A, la surface extérieure S du pneumatique se prolonge par un arc de cercle de rayon R2 supérieur à R1 et dont le centre est axialement extérieur à la surface S du pneumatique,
    - l'arc de cercle de rayon R2 est tangent à son extrémité radialement la plus intérieure B à un arc de cercle de rayon R1 centré sur l'extrémité radialement la plus extérieure du raidisseur, prolongeant la surface extérieure S du pneumatique radialement vers l'intérieur jusqu'au point C, axialement le plus extérieur d'un deuxième cercle C2 de rayon R1 centré sur l'extrémité radialement la plus extérieure du raidisseur.

2.  Pneumatique (1), destiné à être monté sur une jante creuse de type 15° drop center, comprenant une armature de carcasse radiale (2), constituée d'une unique couche d'armature de carcasse formée d'éléments de renforcement, ledit pneumatique comprenant une armature de sommet (5), comprenant deux couches de sommet de travail d'éléments (51, 52) de renforcement croisés d'une couche à l'autre en faisant avec la direction circonférentielle des angles ($\alpha$1, $\alpha$2) compris entre 8° et 45°, lesdits angles $\alpha$1 et $\alpha$2 étant orientés de part et d'autre de la direction circonférentielle, l'armature de sommet (5) étant coiffée radialement d'une bande de roulement (6), ladite bande de roulement étant réunie à deux bourrelets (3) par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement (7) de la couche d'armature de carcasse dans chacun des bourrelets, ledit retournement d'armature de carcasse étant renforcé par au moins une couche d'éléments de renforcement ou raidisseur (9), **caractérisé en ce que** :

- lesdites deux couches de sommet de travail (51, 52) sont seules présentes pour constituer l'armature de sommet (5) sur au moins 75 % de la largeur axiale de l'armature de sommet (5),
- **en ce que** les éléments de renforcement de la couche de sommet de travail (52) radialement la plus extérieure forment un angle ($\alpha$2) avec la direction circonférentielle supérieur en valeur absolue à l'angle ($\alpha$1) formé par les éléments de renforcement de la couche de sommet de travail (51) radialement la plus intérieure avec la direction circonférentielle,
- **en ce que** la valeur absolue de la différence entre les valeurs absolues des angles ($\alpha$2) et ($\alpha$1) est supérieure à 8°,
- **en ce que** l'angle moyen $\alpha$ satisfait la relation :

$$13+131*\exp(-L/100) < \alpha < 20+164*\exp(-L/100),$$

$\alpha$ étant défini par la relation $\alpha = \text{Arctan}((\tan(|\alpha 1|)*\tan(|\alpha 2|))^{1/2})$, L étant la largeur maximum du pneumatique mesurée selon la direction axiale et exprimée en mm,
- **en ce que** les éléments de renforcement métalliques de ladite couche d'armature de carcasse étant des câbles, de préférence non frettés, à au moins deux couches, au moins une couche interne étant gainée d'une couche constituée d'une composition de caoutchouc non réticulable, réticulable ou réticulée, de préférence à base d'au moins un élastomère diénique,

**et en ce que** dans chacun des bourrelets, dans une coupe méridienne dudit pneumatique :

- tout point du profil de la surface extérieure S du pneumatique, entre un premier point F, lui-même défini par l'intersection d'une droite d'orientation axiale, passant par le point E axialement le plus extérieur de la partie principale de la couche d'armature de carcasse et la surface extérieure S du pneumatique, et un point A est à une distance D, constante, de la partie principale de la couche d'armature de carcasse, ladite distance étant mesurée en tout point selon une direction normale à la partie principale de la couche d'armature de carcasse,
- le point A est radialement extérieur à un premier cercle C1 de rayon R1 centré sur l'extrémité du retournement de la couche d'armature de carcasse, R1 étant compris entre 6 et 15 mm,
- radialement à l'intérieur du point A, la surface extérieure S du pneumatique se prolonge par un arc de cercle de rayon R2 supérieur à R1 et dont le centre est axialement extérieur à la surface S du pneumatique,
- l'arc de cercle de rayon R2 est tangent à son extrémité radialement la plus intérieure B à un arc de cercle de rayon R1 centré sur l'extrémité radialement la plus extérieure du raidisseur, prolongeant la surface extérieure S du pneumatique radialement vers l'intérieur jusqu'au point C, axialement le plus extérieur d'un deuxième cercle C2 de rayon R1 centré sur l'extrémité radialement la plus extérieure du raidisseur.

3. Pneumatique (1) selon la revendication 1 ou 2, **caractérisé en ce que** le ratio d'utilisation du potentiel de rupture F2/FR2 de la couche de sommet de travail radialement la plus extérieure (52) est inférieur à 1/6, dans lequel :

- FR2 est la force rupture en extension uniaxiale de chacun des câbles de la couche de sommet de travail radialement la plus extérieure,
-

$$F2 = p_2 * Tc * [(\tan(|\alpha 1|)/((\tan(|\alpha 1|)+\tan(|\alpha 2|))) / \cos^2(|\alpha 2|) + C_F],$$

avec

-

$$Tc = 0.092 * P * Rs* ( 1-(Rs^2-R_L^2)/(2*Rt*Rs) ),$$

- P : la pression de gonflage nominale du pneumatique selon l'ETRTO,

-

$$C_F = 0.00035*(\min((L-80) / \sin(|\alpha1|), (L-80) / \sin(|\alpha2|), 480)-480),$$

- $p_2$ : le pas de pose des éléments de renforcement de la couche de sommet de travail radialement la plus extérieure, mesuré perpendiculairement aux éléments de renforcement au niveau du plan médian circonférentiel,

-

$$Rs = Re - Es,$$

- Re : rayon extérieur du pneumatique mesuré au point radialement le plus extérieur sur la surface de la bande de roulement du pneumatique, ladite surface étant extrapolée pour combler les éventuels creux,
- Es : distance radiale entre le point radialement le plus à l'extérieur du pneumatique et sa projection orthogonale sur la face radialement extérieure d'un élément de renforcement de la couche de sommet de travail radialement la plus à l'intérieure,
- $R_L$ : moyenne des rayons des points axialement les plus à l'extérieur de chaque côté du pneumatique,
- Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement.

4. Pneumatique (1) selon l'une des revendications 1 à 3, **caractérisé en ce que** le ratio d'utilisation du potentiel de rupture F2/FR2 de la couche de sommet de travail (52) radialement la plus extérieure est inférieur à 1/8.

5. Pneumatique (1) selon l'une des revendications 1 à 4, **caractérisé en ce que** le ratio d'utilisation du potentiel de rupture F1/FR1 de la couche de sommet de travail (51) radialement la plus intérieure est inférieur à 1/3, dans lequel :

FR1 est la force rupture en extension uniaxiale de chacun des câbles de la couche de travail radialement la plus intérieure,

$$F1 = p_1 * Tc * [(\tan(|\alpha2|)/((\tan(|\alpha1|)+\tan(|\alpha2|))) / \cos^2(|\alpha1|) + C_F],$$

avec
$p_1$ : le pas de pose des éléments de renforcement de la couche de sommet de travail radialement la plus intérieure, mesuré perpendiculairement aux éléments de renforcement au niveau du plan médian circonférentie,

$$Tc = 0.092 * P * Rs * ( 1-(R_S^2-R_L^2)/(2*Rt* Rs) ),$$

- P : la pression de gonflage nominale du pneumatique selon l'ETRTO,

$$C_F = 0.00035*(\min((L-80) / \sin(|a1|), (L-80) / \sin(|a2|), 480)-480),$$

$$Rs = Re - Es,$$

- Re : rayon extérieur du pneumatique mesuré au point radialement le plus extérieur sur la surface de la bande de roulement du pneumatique, ladite surface étant extrapolée pour combler les éventuels creux,

- Es : distance radiale entre le point radialement le plus à l'extérieur du pneumatique et sa projection orthogonale sur la face radialement extérieure d'un élément de renforcement de la couche de sommet de travail radialement la plus à l'intérieure,
- $R_L$ : moyenne des rayons des points axialement les plus à l'extérieur de chaque côté du pneumatique,
- Rt : le rayon du cercle passant par trois points situés sur la surface extérieure de la bande de roulement en dehors des creux, définis à partir d'une extrémité d'épaulement à des distances axiales respectives égales à 1/4, 1/2 et 3/4 de la largeur de la bande de roulement.

6. Pneumatique (1) selon la revendication 5, **caractérisé en ce que** le ratio d'utilisation du potentiel de rupture F1/FR1 de la couche de travail (51) radialement la plus intérieure est au moins 30 % supérieur au ratio d'utilisation du potentiel de rupture F2/FR2 de la couche de travail (52) radialement la plus extérieure.

7. Pneumatique (1) selon l'une des revendications précédentes, **caractérisé en ce que** les deux couches de sommet de travail (51, 52) sont seules présentes pour constituer l'armature de sommet sur la totalité de la largeur axiale de l'armature de sommet (5).

8. Pneumatique selon l'une des revendications précédentes, **caractérisé en ce que** le rayon R1 du premier cercle C1, centré sur l'extrémité du retournement de la couche d'armature de carcasse, et du deuxième cercle C2, centré sur l'extrémité radialement la plus extérieure du raidisseur, est compris entre 8 et 11 mm.

9. Pneumatique selon l'une des revendications précédentes, **caractérisé en ce que** le rayon R2 est strictement supérieur au rayon R1.

10. Pneumatique selon l'une des revendications précédentes, **caractérisé en ce que** la distance D, mesurée selon une direction normale à la partie principale de la couche d'armature de carcasse, est supérieure à 3 mm et de préférence inférieure à 7 mm.

11. Pneumatique selon l'une des revendications précédentes, **caractérisé en ce que** la distance radiale entre le point (F) et le point (A) est supérieure à 80% de la distance radiale entre le point (F) et le point (G) radialement le plus extérieur de la surface extérieure (S) du pneumatique, pour lequel la distance, mesurée selon une direction normale à la partie principale de la couche d'armature de carcasse, entre ladite partie principale de la couche d'armature de carcasse et la surface (S) est égale à D, ladite distance entre tout point, de la surface extérieure (S) du pneumatique, radialement compris entre les points (F) et (G) et la partie principale de la couche d'armature de carcasse étant constante.

12. Pneumatique selon l'une des revendications précédentes, **caractérisé en ce que,** l'extrémité radialement la plus extérieure du raidisseur est radialement extérieure à l'extrémité du retournement de la couche d'armature de carcasse.

13. Pneumatique selon l'une des revendications précédentes, **caractérisé en ce que,** dans tout plan méridien, dans chaque bourrelet, le pneumatique comporte une armature de contention entourant la tringle et un volume de mélange caoutchouteux directement au contact de la tringle.

**Patentansprüche**

1. Reifen (1) zur Montage auf einer Tiefbettfelge vom Typ 15°-Drop-Center, umfassend eine radiale Karkassenbewehrung (2), die aus einer einzigen Karkassenbewehrungsschicht gebildet ist, die aus Verstärkungselementen gebildet ist, wobei der Reifen eine Scheitelbewehrung (5) umfasst, die zwei Arbeitsscheitelschichten aus Verstärkungselementen (51, 52) umfasst, die von einer Schicht zur anderen gekreuzt sind, wobei sie mit der Umfangsrichtung Winkel ($\alpha$1, $\alpha$2) zwischen 8° und 45° bilden, wobei die Winkel $\alpha$1 und $\alpha$2 beiderseits der Umfangsrichtung ausgerichtet sind, wobei die Scheitelbewehrung (5) radial von einem Laufstreifen (6) bedeckt ist, wobei der Laufstreifen über zwei Flanken mit zwei Wülsten (3) verbunden ist, wobei die Karkassenbewehrungsschicht durch Umschlagen um einen Wulstkern in jedem der Wülste verankert ist, um einen Hauptabschnitt der Karkassenbewehrungsschicht, der sich von einem Wulstkern zum anderen erstreckt, und einen Umschlag (7) der Karkassenbewehrungsschicht in jedem der Wülste zu bilden, wobei der Karkassenbewehrungsumschlag von wenigstens einer Schicht aus Verstärkungs- oder Versteifungselementen (9) verstärkt ist, **dadurch gekennzeichnet, dass**:

- die zwei Arbeitsscheitelschichten (51, 52) allein dafür vorhanden sind, die Scheitelbewehrung (5) auf wenigstens 75 % der axialen Breite der Scheitelbewehrung (5) zu bilden,
- dadurch, dass die Verstärkungselemente der radial äußersten Arbeitsscheitelschicht (52) einen Winkel ($\alpha$2) zur Umfangsrichtung bilden, der im Absolutwert größer als der Winkel ($\alpha$1) ist, der von den Verstärkungselementen der radial innersten Arbeitsscheitelschicht (51) zur Umfangsrichtung gebildet wird,
- dadurch, dass der Absolutwert der Differenz zwischen den Absolutwerten der Winkel ($\alpha$2) und ($\alpha$1) größer als 8° ist,
- dadurch, dass der mittlere Winkel $\alpha$ die folgende Beziehung erfüllt:

$$13+131*\exp(-L/100) < \alpha < 20+164*\exp(-L/100),$$

wobei $\alpha$ durch die Beziehung $\alpha$ = Arctan((tan($\alpha$1|)*tan(|$\alpha$2|))$^{1/2}$) definiert ist, wobei L die maximale Breite des Reifens ist, die in der Axialrichtung gemessen und in mm ausgedrückt wird,
- dadurch, dass die metallischen Verstärkungselemente der Karkassenbewehrungsschicht Seile sind, die bei der Durchlässigkeitsprüfung nach der Norm ASTM D2692-98 einen Durchsatz unter 20 cm$^3$/min aufweisen, und
- dadurch, dass eine Kautschukmischung wenigstens lokal im Inneren der Struktur der Seile vorhanden ist, und dadurch, dass in jedem der Wülste in einem Meridianschnitt des Reifens:

    - jeder Punkt des Profils der Außenfläche S des Reifens zwischen einem ersten Punkt F, der seinerseits vom Schnittpunkt einer Geraden mit axialer Ausrichtung definiert ist, die durch den axial äußersten Punkt E des Hauptabschnitts der Karkassenbewehrungsschicht und die Außenfläche S des Reifens verläuft, und einem Punkt A sich in einem konstanten Abstand D vom Hauptabschnitt der Karkassenbewehrungsschicht befindet, wobei der Abstand an jedem Punkt in einer Richtung gemessen wird, die normal zum Hauptabschnitt der Karkassenbewehrungsschicht verläuft,
    - der Punkt A radial außerhalb eines ersten Kreises C1 mit einem Radius R1 liegt, der auf dem Ende des Umschlags der Karkassenbewehrungsschicht zentriert ist, wobei R1 zwischen 6 und 15 mm beträgt,
    - radial innerhalb des Punkts A sich die Außenfläche S des Reifens durch einen Kreisbogen mit einem Radius R2 fortsetzt, der größer als R1 ist und dessen Mittelpunkt axial außerhalb der Fläche S des Reifens liegt,
    - der Kreisbogen mit einem Radius R2 an seinem radial innersten Ende B tangential zu einem Kreisbogen mit einem Radius R1 verläuft, der auf dem radial äußersten Ende des Versteifungselements zentriert ist, wobei er die Außenfläche S des Reifens radial nach innen bis zu einem axial äußersten Punkt C eines zweiten Kreises C2 mit einem Radius R1 fortsetzt, der auf dem radial äußersten Ende des Versteifungselements zentriert ist.

2. Reifen (1) zur Montage auf einer Tiefbettfelge vom Typ 15°-Drop-Center, umfassend eine radiale Karkassenbewehrung (2), die aus einer einzigen Karkassenbewehrungsschicht gebildet ist, die aus Verstärkungselementen gebildet ist, wobei der Reifen eine Scheitelbewehrung (5) umfasst, die zwei Arbeitsscheitelschichten aus Verstärkungselementen (51, 52) umfasst, die von einer Schicht zur anderen gekreuzt sind, wobei sie mit der Umfangsrichtung Winkel ($\alpha$1, $\alpha$2) zwischen 8° und 45° bilden, wobei die Winkel $\alpha$1 und $\alpha$2 beiderseits der Umfangsrichtung ausgerichtet sind, wobei die Scheitelbewehrung (5) radial von einem Laufstreifen (6) bedeckt ist, wobei der Laufstreifen über zwei Flanken mit zwei Wülsten (3) verbunden ist, wobei die Schicht aus Verstärkungselementen der Karkassenbewehrung durch Umschlagen um einen Wulstkern in jedem der Wülste verankert ist, um einen Hauptabschnitt der Karkassenbewehrungsschicht, der sich von einem Wulstkern zum anderen erstreckt, und einen Umschlag (7) der Karkassenbewehrungsschicht in jedem der Wülste zu bilden, wobei der Karkassenbewehrungsumschlag von wenigstens einer Schicht aus Verstärkungs- oder Versteifungselementen (9) verstärkt ist, **dadurch gekennzeichnet, dass**:

    - die zwei Arbeitsscheitelschichten (51, 52) allein dafür vorhanden sind, die Scheitelbewehrung (5) auf wenigstens 75 % der axialen Breite der Scheitelbewehrung (5) zu bilden,
    - dadurch, dass die Verstärkungselemente der radial äußersten Arbeitsscheitelschicht (52) einen Winkel ($\alpha$2) zur Umfangsrichtung bilden, der im Absolutwert größer als der Winkel ($\alpha$1) ist, der von den Verstärkungselementen der radial innersten Arbeitsscheitelschicht (51) zur Umfangsrichtung gebildet wird,
    - dadurch, dass der Absolutwert der Differenz zwischen den Absolutwerten der Winkel ($\alpha$2) und ($\alpha$1) größer als 8° ist,
    - dadurch, dass der mittlere Winkel $\alpha$ die folgende Beziehung erfüllt:

$$13+131*exp(-L/100) < \alpha < 20+164*exp(-L/100),$$

wobei $\alpha$ durch die Beziehung $\alpha$ = Arctan((tan($\alpha$1)*tan(|$\alpha$2|))$^{1/2}$) definiert ist, wobei L die maximale Breite des Reifens ist, die in der Axialrichtung gemessen und in mm ausgedrückt wird,
- dadurch, dass die metallischen Verstärkungselemente der Karkassenbewehrungsschicht Seile, vorzugsweise nicht umschnürte, mit wenigstens zwei Schichten sind, wobei wenigstens eine Innenschicht mit einer Schicht umhüllt ist, die von einer nicht vernetzbaren, vernetzbaren oder vernetzten Kautschukzusammensetzung, vorzugsweise auf Basis von wenigstens einem Dienelastomer gebildet ist, und dadurch, dass in jedem der Wülste in einem Meridianschnitt des Reifens:

- jeder Punkt des Profils der Außenfläche S des Reifens zwischen einem ersten Punkt F, der seinerseits vom Schnittpunkt einer Geraden mit axialer Ausrichtung definiert ist, die durch den axial äußersten Punkt E des Hauptabschnitts der Karkassenbewehrungsschicht und die Außenfläche S des Reifens verläuft, und einem Punkt A sich in einem konstanten Abstand D vom Hauptabschnitt der Karkassenbewehrungsschicht befindet, wobei der Abstand an jedem Punkt in einer Richtung gemessen wird, die normal zum Hauptabschnitt der Karkassenbewehrungsschicht verläuft,
- der Punkt A radial außerhalb eines ersten Kreises C1 mit einem Radius R1 liegt, der auf dem Ende des Umschlags der Karkassenbewehrungsschicht zentriert ist, wobei R1 zwischen 6 und 15 mm beträgt,
- radial innerhalb des Punkts A sich die Außenfläche S des Reifens durch einen Kreisbogen mit einem Radius R2 fortsetzt, der größer als R1 ist und dessen Mittelpunkt axial außerhalb der Fläche S des Reifens liegt,
- der Kreisbogen mit einem Radius R2 an seinem radial innersten Ende B tangential zu einem Kreisbogen mit einem Radius R1 verläuft, der auf dem radial äußersten Ende des Versteifungselements zentriert ist, wobei er die Außenfläche S des Reifens radial nach innen bis zu einem axial äußersten Punkt C eines zweiten Kreises C2 mit einem Radius R1 fortsetzt, der auf dem radial äußersten Ende des Versteifungselements zentriert ist.

3. Reifen (1) nach Anspruch 1 oder 2, **dadurch gekennzeichnet, dass** der Ausschöpfungsgrad des Bruchpotentials F2/FR2 der radial äußersten Arbeitsscheitelschicht (52) kleiner als 1/6 ist, wobei:

- FR2 die Bruchkraft bei uniaxialer Dehnung jedes der Seile der radial äußersten Arbeitsscheitelschicht ist,
-

$$F2 = p_2 * Tc * [(tan(|\alpha1|)/((tan(|\alpha1|)+tan(|\alpha2|)))) / cos^2(|\alpha2|) + C_F],$$

wobei

-

$$Tc = 0.092 * P * Rs* ( 1-(Rs^2-RL^2)/(2*Rt*Rs) ),$$

- P: der Nenn-Aufblasdruck des Reifens gemäß ETRTO,
-

$$C_F = 0.00035 *(min((L-80) / sin( |\alpha1|), (L-80) / sin(|\alpha2|), 480)-480),$$

- $p_2$: der Legeabstand der Verstärkungselemente der radial äußersten Arbeitsscheitelschicht, der senkrecht zu den Verstärkungselementen an der Umfangsmeridianebene gemessen wird,
-

$$Rs = Re - Es,$$

- Re: Außenradius des Reifens, der am radial äußersten Punkt auf der Oberfläche des Laufstreifens des Reifens gemessen wird, wobei die Fläche extrapoliert wird, um eventuelle Hohlräume zu füllen,
- Es: radialer Abstand zwischen dem radial äußersten Punkt des Reifens und seiner Orthogonalprojektion auf der radial äußeren Fläche eines Verstärkungselements der radial innersten Arbeitsscheitelschicht,
- $R_L$ : Durchschnitt der Radien der axial äußersten Punkte auf jeder Seite des Reifens,
- Rt: der Radius des Kreises, der durch drei Punkte verläuft, die sich auf der Außenfläche des Laufstreifens außerhalb der Hohlräume befinden, die anhand eines Schulterendes in jeweiligen axialen Abständen definiert sind, die gleich 1/4, 1/2 und 3/4 der Breite des Laufstreifens sind.

4. Reifen (1) nach einem der Ansprüche 1 bis 3, **dadurch gekennzeichnet, dass** der Ausschöpfungsgrad des Bruchpotentials F2/FR2 der radial äußersten Arbeitsscheitelschicht (52) kleiner als 1/8 ist.

5. Reifen (1) nach einem der Ansprüche 1 bis 4, **dadurch gekennzeichnet, dass** der Ausschöpfungsgrad des Bruchpotentials F1/FR1 der radial innersten Arbeitsscheitelschicht (51) kleiner als 1/3 ist, wobei:

FR1 die Bruchkraft bei uniaxialer Dehnung jedes der Seile der radial innersten Arbeitsschicht ist,

$$\text{F1} = p_1 * \text{Tc} * [(\tan(|\alpha2|)/((\tan(|\alpha2|)+\tan(|\alpha1|))) / \cos^1(|\alpha1|) + C_F],$$

wobei
$p_1$: der Legeabstand der Verstärkungselemente der radial innersten Arbeitsscheitelschicht, der senkrecht zu den Verstärkungselementen an der Umfangsmittelebene gemessen wird,

$$\text{Tc} = 0.092 * P * \text{Rs} * ( 1-(R_S^2-Rt^2)/(2*R* \text{Rs}) ),$$

- P: der Nenn-Aufblasdruck des Reifens gemäß ETRTO,

-

$$C_F = 0.00035*(\min((L-80) / \sin(|\alpha1|), (L-80) / \sin(|\alpha2|), 480)-480),$$

-

$$\text{Rs} = \text{Re} - \text{Es},$$

- Re: Außenradius des Reifens, der am radial äußersten Punkt auf der Oberfläche des Laufstreifens des Reifens gemessen wird, wobei die Fläche extrapoliert wird, um eventuelle Hohlräume zu füllen,
- Es: radialer Abstand zwischen dem radial äußersten Punkt des Reifens und seiner Orthogonalprojektion auf der radial äußeren Fläche eines Verstärkungselements der radial innersten Arbeitsscheitelschicht,
- $R_L$ : Durchschnitt der Radien der axial äußersten Punkte auf jeder Seite des Reifens,
- Rt: der Radius des Kreises, der durch drei Punkte verläuft, die sich auf der Außenfläche des Laufstreifens außerhalb der Hohlräume befinden, die anhand eines Schulterendes in jeweiligen axialen Abständen definiert sind, die gleich 1/4, 1/2 und 3/4 der Breite des Laufstreifens sind.

6. Reifen (1) nach Anspruch 5, **dadurch gekennzeichnet, dass** der Ausschöpfungsgrad des Bruchpotentials F1/FR1 der radial innersten Arbeitsschicht (51) wenigstens 30 % über dem Ausschöpfungsgrad des Bruchpotentials F2/FR2 der radial äußersten Arbeitsschicht (52) liegt.

7. Reifen (1) nach einem der vorhergehenden Ansprüche, **dadurch gekennzeichnet, dass** die zwei Arbeitsscheitelschichten (51, 52) allein dafür vorhanden sind, die Scheitelbewehrung über die gesamte axiale Breite der Scheitelbewehrung (5) zu bilden.

8. Reifen nach einem der vorhergehenden Ansprüche, **dadurch gekennzeichnet, dass** der Radius R1 des ersten Kreises C1, der auf dem Ende des Umschlags der Karkassenbewehrungsschicht zentriert ist, und des zweiten Kreises C2, der auf dem radial äußersten Ende des Versteifungselements zentriert ist, zwischen 8 und 11 mm beträgt.

9. Reifen nach einem der vorhergehenden Ansprüche, **dadurch gekennzeichnet, dass** der Radius R2 streng größer als der Radius R1 ist.

10. Reifen nach einem der vorhergehenden Ansprüche, **dadurch gekennzeichnet, dass** der Abstand D, der in einer Richtung gemessen wird, die normal zum Hauptabschnitt der Karkassenbewehrungsschicht verläuft, größer als 3 mm und vorzugsweise kleiner als 7 mm ist.

11. Reifen nach einem der vorhergehenden Ansprüche, **dadurch gekennzeichnet, dass** der radiale Abstand zwischen dem Punkt (F) und dem Punkt (A) größer als 80 % des radialen Abstands zwischen dem Punkt (F) und dem radial äußersten Punkt (G) der Außenfläche (S) des Reifens ist, für welchen der Abstand, der in einer Richtung gemessen wird, die normal zum Hauptabschnitt der Karkassenbewehrungsschicht verläuft, zwischen dem Hauptabschnitt der Karkassenbewehrungsschicht und der Fläche (S) gleich D ist, wobei der Abstand zwischen jedem Punkt der Außenfläche (S) des Reifens, der radial zwischen den Punkten (F) und (G) und dem Hauptabschnitt der Karkassenbewehrungsschicht liegt, konstant ist.

12. Reifen nach einem der vorhergehenden Ansprüche, **dadurch gekennzeichnet, dass** das radial äußerste Ende des Versteifungselements radial außerhalb des Endes des Umschlags der Karkassenbewehrungsschicht liegt.

13. Reifen nach einem der vorhergehenden Ansprüche, **dadurch gekennzeichnet, dass** in jeder Meridianebene in jedem Wulst der Reifen eine Begrenzungbewehrung, die den Wulstkern umgibt, und ein Volumen einer Kautschukmischung aufweist, das direkt in Kontakt mit dem Wulstkern steht.

**Claims**

1. Tyre (1) intended to be fitted on a drop-centre rim of the "15° drop-centre" type, comprising a radial carcass reinforcement (2) made up of a single carcass reinforcement layer formed of reinforcing elements, said tyre comprising a crown reinforcement (5), comprising two working crown layers of reinforcing elements (51, 52) that are crossed from one layer to the other, making with the circumferential direction angles ($\alpha$1, $\alpha$2) of between 8° and 45°, said angles $\alpha$1 and $\alpha$2 being oriented on either side of the circumferential direction, the crown reinforcement (5) being radially capped by a tread (6), said tread being connected to two beads (3) via two sidewalls, the carcass reinforcement layer being anchored in each of the beads by being turned up around a bead wire to form a main part of the carcass reinforcement layer extending from one bead wire to the other, and a turn-up (7) of the carcass reinforcement layer in each of the beads, said turn-up of the carcass reinforcement being reinforced by at least one layer of reinforcing elements or a stiffener (9), **characterized in that:**

   - said two working crown layers (51, 52) are the only ones present to form the crown reinforcement (5) over at least 75% of the axial width of the crown reinforcement (5),
   - **in that** the reinforcing elements of the radially outermost working crown layer (52) form an angle ($\alpha$2) with the circumferential direction that is greater in terms of absolute value than the angle ($\alpha$1) formed by the reinforcing elements of the radially innermost working crown layer (51) with the circumferential direction,
   - **in that** the absolute value of the difference between the absolute values of the angles ($\alpha$2) and ($\alpha$1) is greater than 8°,
   - **in that** the mean angle $\alpha$ satisfies the relationship:

$$13+131*\exp(-L/100) < \alpha < 20+164*\exp(-L/100),$$

   $\alpha$ being defined by the relationship $\alpha$ = Arctan((tan($|\alpha1|$)*tan($|\alpha2|$))$^{1/2}$), L being the maximum width of the tyre measured in the axial direction and expressed in mm,
   - **in that** the metal reinforcing elements of said carcass reinforcement layer are cords that, in the test referred to as the permeability test, according to the standard ASTM D2692-98, yield a flow rate of less than 20 cm$^3$/min, and
   - **in that** a rubber compound is present at least locally within the structure of said cords, **and in that,** in each of the beads, in a meridian section of said tyre:

- any point of the profile of the outer surface S of the tyre, between a first point F, itself defined by the intersection of an axially oriented straight line, passing through the axially outermost point E of the main part of the carcass reinforcement layer and the outer surface S of the tyre, and a point A, is at a constant distance D from the main part of the carcass reinforcement layer, said distance being measured at any point in a direction normal to the main part of the carcass reinforcement layer,
- the point A is radially on the outside of a first circle C1 of radius R1 that is centred on the end of the turn-up of the carcass reinforcement layer, R1 being between 6 and 15 mm,
- radially on the inside of the point A, the outer surface S of the tyre extends by an arc of a circle of radius R2 greater than R1 and the centre of which is axially on the outside of the surface S of the tyre,
- the circular arc of radius R2 is tangential at its radially innermost end B to a circular arc of radius R1 centred on the radially outermost end of the stiffener, continuing the outer surface S of the tyre radially inwards as far as the axially outermost point C of a second circle C2 of radius R1 centred on the radially outermost end of the stiffener.

2. Tyre (1) intended to be fitted on a drop-centre rim of the "15° drop-centre" type, comprising a radial carcass reinforcement (2) made up of a single carcass reinforcement layer formed of reinforcing elements, said tyre comprising a crown reinforcement (5), comprising two working crown layers of reinforcing elements (51, 52) that are crossed from one layer to the other, making with the circumferential direction angles ($\alpha$1, $\alpha$2) of between 8° and 45°, said angles $\alpha$1 and $\alpha$2 being oriented on either side of the circumferential direction, the crown reinforcement (5) being radially capped by a tread (6), said tread being connected to two beads (3) via two sidewalls, the layer of reinforcing elements of the carcass reinforcement being anchored in each of the beads by being turned up around a bead wire to form a main part of the carcass reinforcement layer extending from one bead wire to the other, and a turn-up (7) of the carcass reinforcement layer in each of the beads, said turn-up of the carcass reinforcement being reinforced by at least one layer of reinforcing elements or a stiffener (9), **characterized in that:**

- said two working crown layers (51, 52) are the only ones present to form the crown reinforcement (5) over at least 75% of the axial width of the crown reinforcement (5),
- **in that** the reinforcing elements of the radially outermost working crown layer (52) form an angle ($\alpha$2) with the circumferential direction that is greater in terms of absolute value than the angle ($\alpha$1) formed by the reinforcing elements of the radially innermost working crown layer (51) with the circumferential direction,
- **in that** the absolute value of the difference between the absolute values of the angles ($\alpha$2) and ($\alpha$1) is greater than 8°,
- **in that** the mean angle $\alpha$ satisfies the relationship:

$$13+131*\exp(-L/100) < \alpha < 20+164*\exp(-L/100),$$

$\alpha$ being defined by the relationship $\alpha = \mathrm{Arctan}((\tan(|\alpha1|)*\tan(|\alpha2|))^{1/2})$, L being the maximum width of the tyre measured in the axial direction and expressed in mm,
- **in that** the metal reinforcing elements of said carcass reinforcement layer being cords, preferably non-wrapped cords, having at least two layers, at least one inner layer being sheathed with a layer consisting of a non-crosslinkable, crosslinkable or crosslinked rubber composition, preferably based on at least one diene elastomer,

**and in that,** in each of the beads, in a meridian section of said tyre:

- any point of the profile of the outer surface S of the tyre, between a first point F, itself defined by the intersection of an axially oriented straight line, passing through the axially outermost point E of the main part of the carcass reinforcement layer and the outer surface S of the tyre, and a point A, is at a constant distance D from the main part of the carcass reinforcement layer, said distance being measured at any point in a direction normal to the main part of the carcass reinforcement layer,
- the point A is radially on the outside of a first circle C1 of radius R1 that is centred on the end of the turn-up of the carcass reinforcement layer, R1 being between 6 and 15 mm,
- radially on the inside of the point A, the outer surface S of the tyre extends by an arc of a circle of radius R2 greater than R1 and the centre of which is axially on the outside of the surface S of the tyre,
- the circular arc of radius R2 is tangential at its radially innermost end B to a circular arc of radius R1 centred on the radially outermost end of the stiffener, continuing the outer surface S of the tyre radially inwards as far as the axially outermost point C of a second circle C2 of radius R1 centred on the radially outermost end of the stiffener.

3. Tyre (1) according to Claim 1 or 2, **characterized in that** the rupture potential index F2/FR2 of the radially outermost working crown layer (52) is less than 1/6, where:

- FR2 is the breaking force in uniaxial extension of each of the cords of the radially outermost working crown layer,

$$F2 = p_2 * Tc * [(\tan(|\alpha 1|)/((\tan(|\alpha 1|)+\tan(|\alpha 2|))) / \cos^2(|\alpha 2|) + C_F],$$

where

$$Tc = 0.092 * P * Rs * (1-(Rs^2-R_L^2)/(2*Rt*Rs)),$$

- P is the nominal inflation pressure of the tyre according to the ETRTO,

$$C_F = 0.00035*(\min((L-80) / \sin(|\alpha 1|), (L-80) / \sin(|\alpha 2|), 480)-480),$$

- $p_2$ is the pitch at which the reinforcing elements of the radially outermost working crown layer are laid, measured perpendicularly to the reinforcing elements at the circumferential median plane,

$$Rs = Re - Es,$$

- Re is the external radius of the tyre, measured at the radially outermost point on the tread surface of the tyre, said surface being extrapolated in order to fill any voids there might be,
- Es is the radial distance between the radially outermost point of the tyre and the orthogonal projection thereof onto the radially exterior face of a reinforcing element of the radially innermost working crown layer,
- RL is the mean of the radii of the axially outermost points on each side of the tyre,
- Rt is the radius of the circle passing through three points situated on the exterior surface of the tread outside of the voids, defined from a shoulder end at respective axial distances equal to ¼, ½ and ¾ of the width of the tread.

4. Tyre (1) according to one of Claims 1 to 3, **characterized in that** the rupture potential index F2/FR2 of the radially outermost working crown layer (52) is less than 1/8.

5. Tyre (1) according to one of Claims 1 to 4, **characterized in that** the rupture potential index F1/FR1 of the radially innermost working crown layer (51) is less than 1/3, where:

FR1 is the breaking force in uniaxial extension of each of the cords of the radially innermost working layer,

$$F1 = p_1 * Tc * [(\tan(|\alpha 2|)/((\tan(|\alpha 1|)+\tan(|\alpha 2|))) / \cos^2(|\alpha 1|) + C_F],$$

where
$p_1$ is the pitch at which the reinforcing elements of the radially innermost working crown layer are laid, measured perpendicularly to the reinforcing elements at the circumferential median plane,

$$Tc = 0.092 * P * Rs * (1-(Rs^2-R_L^2)/(2*Rt*Rs)),$$

- P is the nominal inflation pressure of the tyre according to the ETRTO,

$$C_F = 0.00035*(\min((L-80) / \sin(|\alpha 1|), (L-80) / \sin(|\alpha 2|), 480)-480),$$

$$Rs = Re - Es,$$

- Re is the external radius of the tyre, measured at the radially outermost point on the tread surface of the tyre, said surface being extrapolated in order to fill any voids there might be,
- Es is the radial distance between the radially outermost point of the tyre and the orthogonal projection thereof onto the radially exterior face of a reinforcing element of the radially innermost working crown layer,
- RL is the mean of the radii of the axially outermost points on each side of the tyre,
- Rt is the radius of the circle passing through three points situated on the exterior surface of the tread outside of the voids, defined from a shoulder end at respective axial distances equal to ¼, ½ and ¾ of the width of the tread.

6. Tyre (1) according to Claim 5, **characterized in that** the rupture potential index F1/FR1 of the radially innermost working layer (51) is at least 30% higher than the rupture potential index F2/FR2 of the radially outermost working layer (52).

7. Tyre (1) according to one of the preceding claims, **characterized in that** the two working crown layers (51, 52) are the only ones present to form the crown reinforcement over the entirety of the axial width of the crown reinforcement (5).

8. Tyre according to one of the preceding claims, **characterized in that** the radius R1 of the first circle C1, centred on the end of the turn-up of the carcass reinforcement layer, and of the second circle C2, centred on the radially outermost end of the stiffener, is between 8 and 11 mm.

9. Tyre according to one of the preceding claims, **characterized in that** the radius R2 is strictly greater than the radius R1.

10. Tyre according to one of the preceding claims, **characterized in that** the distance D, measured in a direction normal to the main part of the carcass reinforcement layer, is greater than 3 mm and preferably less than 7 mm.

11. Tyre according to one of the preceding claims, **characterized in that** the radial distance between the point (F) and the point (A) is greater than 80% of the radial distance between the point (F) and the radially outermost point (G) of the outer surface (S) of the tyre, for which the distance, measured in a direction normal to the main part of the carcass reinforcement layer, between said main part of the carcass reinforcement layer and the surface (S), is equal to D, said distance between any point, on the outer surface (S) of the tyre, radially between the points (F) and (G) and the main part of the carcass reinforcement layer being constant.

12. Tyre according to one of the preceding claims, **characterized in that** the radially outermost end of the stiffener is radially on the outside of the end of the turn-up of the carcass reinforcement layer.

13. Tyre according to one of the preceding claims, **characterized in that,** in any meridian plane, in each bead, the tyre has a retention reinforcement surrounding the bead wire and a volume of rubber compound in direct contact with the bead wire.

FIG. 1

FIG. 2

FIG. 3

**RÉFÉRENCES CITÉES DANS LA DESCRIPTION**

**Documents brevets cités dans la description**

- FR 2779387
- US 20060000199 A
- FR 2728510
- WO 9924269 A
- JP 2000185530 A
- FR 2415016 A1
- JP 2012081951 A
- WO 2017149222 A